# EUROPÄISCHE PATENTANMELDUNG

(11) **EP 1 701 143 A1**
(43) Veröffentlichungstag der Anmeldung: **13.09.2006**
(21) Anmeldenummer: 05004985.7
(22) Anmeldetag: 08.03.2005
(51) Int. Cl.: G01G 19/414, G01G 21/28

(54) **Waage**

(71) Anmelder: Soehnle-Waagen GmbH & Co. KG, 71540 Murrhardt (DE)
(72) Erfinder: Stahl, Albrecht, 71560 Sulzbach (DE)
(74) Vertreter: Naumann, Ulrich

(57) **Zusammenfassung**

Eine Waage (1), insbesondere für Nahrungsmittel, umfasst eine Aufnahme (2) für den zu wiegenden Gegenstand, die an einem Fußelement (5) gehalten ist, eine Anzeigeeinheit (7) und eine Eingabeeinheit (8). Erfindungsgemäß sind die Anzeigeeinheit (7) und die Eingabeeinheit (8) als separates Bauteil von dem Fußelement (5) und der Aufnahme (2) entfernbar und für einen Datenaustausch ist eine ankoppelbare Schnittstelle vorhanden. Dadurch kann die Waage (1) kompakt ausgeführt sein und der Benutzer kann bei Entfernung der Anzeigeeinheit (7) und der Eingabeeinheit (8) auf die Daten mobil zugreifen.

## Beschreibung

Die vorliegende Erfindung betrifft eine Waage, insbesondere fiir Nahrungsmittel, mit einer Aufnahme für den zu wiegenden Gegenstand, die an einem Fußelement gehalten ist, einer Anzeigeeinheit und einer Eingabeeinheit.

Es gibt Waagen für Lebensmittel, die auch als "Diät Computer" bezeichnet werden, da diese nicht nur wiegen können sondern auch Daten über Nährwerte von Lebensmitteln abgespeichert haben. Solche Diät Computer weisen neben einer Wiegeeinheit eine Anzeige- und eine Eingabeeinheit auf, in der die jeweiligen Daten angezeigt werden. Ferner lassen sich über die Eingabeeinheit auch neue Daten über Lebensmittel eingeben, damit insbesondere Personen mit chronischen Krankheiten, wie Diabetes, sich neben der reinen Gewichtsinformation auch weitere Informationen zu den Nährwerten anzeigen lassen können. Nachteilig bei diesen Waagen ist, dass der Platzbedarf aufgrund der Anordnung von Wiegeeinheit, Anzeigeeinheit und Eingabeeinheit vergleichsweise groß ist. Zudem kann der Benutzer die Werte nur in Verbindung mit der Waage nutzen, was insbesondere bei einer Entfernung vom Aufstellungsort der Waage bei Reisen ein Problem darstellt.

Es ist daher Aufgabe der vorliegenden Erfindung eine Waage bereitzustellen, die kompakt aufgebaut ist und dem Benutzer ein hohes Maß an Mobilität ermöglicht.

Diese Aufgabe wird mit einer Waage mit den Merkmalen des Anspruches 1 gelöst.

Erfindungsgemäß sind die Anzeigeeinheit und die Eingabeeinheit der Waage als separates Bauteil von dem Fußelement und der Aufnahme entfernbar und für einen Datenaustausch ist eine ankoppelbare Schnittstelle vorhanden. Dadurch kann der Benutzer am Aufstellungsort der Waage die Anzeigeeinheit und die Eingabeeinheit nutzen, um in Verbindung mit Messungen notwendige Informationen über die Lebensmittel und deren Bestandteile anzeigen zu können. Durch die entfernbare Ausgestaltung der Anzeigeeinheit und der Eingabeeinheit können die abgelegten Daten jedoch auch mobil genutzt werden, wobei der Benutzer über die Anzeigeeinheit und die Eingabeeinheit auf die abgelegten Informationen zurückgreifen kann. Die Gewichtsdaten oder Volumendaten können bei Bedarf auch anderweitig eingegeben werden, sodass erfindungsgemäß die Waage sämtliche Vorteile eines Diätcomputers besitzt, der zusätzlich allerdings auch durch die Abnehmbarkeit für Reisen geeignet ist.

Gemäß einer bevorzugten Ausgestaltung der Erfindung ist eine kabellose Schnittstelle mit Übertragung der Daten per Funk oder Infrarot vorgesehen. Dies vereinfacht die Handhabung, da die Anzeigeeinheit und die Eingabeeinheit dann lediglich an das Fußelement angelegt werden müssen, oder aber nur eine Aufstellung innerhalb einiger Meter Entfernung für einen Datenaustausch ausreicht. Für einen besonders kompakten Aufbau ist eine solche Schnittstelle an dem Fußelement vorgesehen.

Vorzugsweise ist eine mechanische oder magnetische Ankopplung zwischen Anzeigeeinheit und Eingabeeinheit einerseits und dem Fußelement andererseits möglich. Dadurch wird der Datenaustausch zuverlässig gewährleistet und es kann eine Ausrichtung und Fixierung der Anzeigeeinheit und Eingabeeinheit erfolgen. Beispielsweise kann die Anzeigeeinheit ein Display aufweisen, das rückseitig an das Fußelement anlegbar ist, und dort über Magnete oder Rastmittel fixiert wird. Dann lassen sich komfortabel Daten ablesen. Ferner kann die Eingabeeinheit verschwenkbar an der Anzeigeeinheit gehalten sein, sodass auch die Eingabeeinheit an dem Fußelement fixiert ist.

Um die Informationen über Lebensmittel aktualisieren zu können, ist die Eingabeeinheit vorzugsweise editierbar ausgebildet, ermöglicht also eine Bearbeitung der gespeicherten Lebensmitteldaten. Ferner kann zur Aktualisierung der Lebensmitteldaten auch ein Anschluss an einen PC vorgesehen sein, damit auch größere Datenmengen komfortabel ausgetauscht werden können.

Die Erfindung wird nachfolgend im Detail anhand eines Ausführungsbeispiels erläutert. Es zeigen:

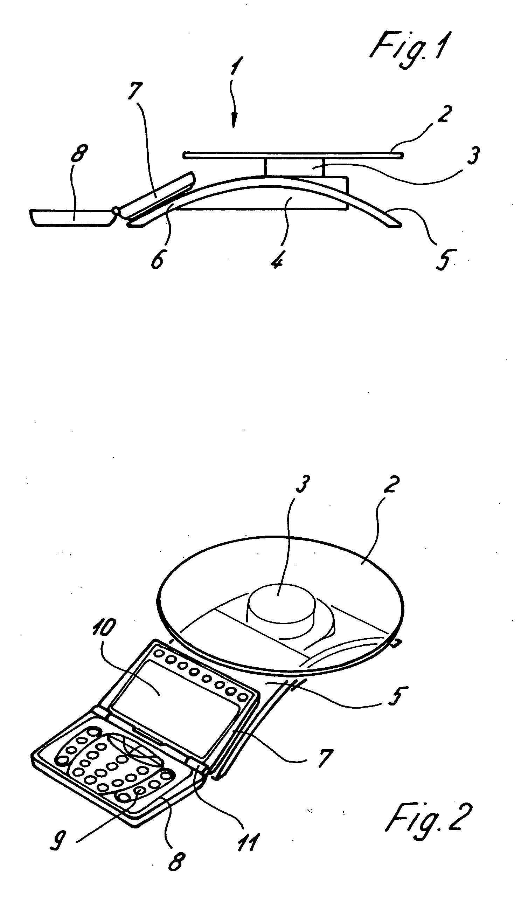

- Figur 1: eine Seitenansicht eines Ausführungsbeispiels einer erfindungsgemäßen Waage;
- Figur 2: eine perspektivische Ansicht der Waage der Figur 1, und
- Figur 3: eine perspektivische Ansicht der Waage der Figur 1 mit abgenommener Anzeige- und Eingabeeinheit.

Eine Waage 1 umfasst eine Aufnahme 2, die plattenförmig ausgebildet ist und einen zu wiegenden Gegenstand aufnehmen kann. Die Aufnahme 2 ist an einem Kolben 3 gehalten, der in eine Messvorrichtung 4 eintaucht. In der Messvorrichtung 4 können in bekannter Weise Messelemente, Elemente zur Stromversorgung und ein Computer untergebracht sein. Die Messeinheit 4 sowie die Aufnahme 2 mit dem Kolben 3 sind an einem Fußelement 5 gehalten, das bogenförmig auf einer Ablagefläche abstellbar ist. Das Fußelement 5 weist einen Abschnitt 6 auf, der in Draufsicht auf die Waage 1 von oben über die Aufnahme 2 hervorsteht. An dem Abschnitt 6 ist eine Anzeigeeinheit 7 aufgelegt, die über ein Scharnier 11 mit einer Eingabeeinheit 8 verbunden ist.

Die Anzeigeeinheit 7 weist ein Display 10 auf, an dem relevante Informationen über Lebensmittel angezeigt werden. Diese Daten können über die Eingabeeinheit 8 mit entsprechenden Tasten 9 modifiziert werden.

An der Anzeigeeinheit 7 ist ferner eine Schnittstelle zur Verbindung mit der Messeinheit 4 vorgesehen, die über Funk, Infrarot oder andere geeignete Übertragungsmittel erfolgen kann. Dadurch lässt sich an der Anzeigeeinheit 7 unmittelbar ein bestimmter Wert eines Lebensmittels anzeigen, das auf der Aufnahme 2 gewogen wird. Zudem können natürlich auch Gewichtsdaten angezeigt werden.

Zur Kopplung der Anzeigeinheit 7 können an dem Abschnitt 6 Magnete oder Rastmittel vorgesehen sein, damit die Anzeigeeinheit 7 nicht nur angelegt sondern auch ausgerichtet und fixiert wird, damit auch die Eingabeeinheit 8 an dem Fußelement 5 gehalten ist. Dies erleichtert die Bedienbarkeit. Wenn an der Anzeigeeinheit 7 rückseitig zum Display 10 Magnete vorgesehen sind, kann die Anzeigeeinheit 7 auch an Metallflächen angehängt werden, beispielsweise an Kühlschranktüren oder Magnettafeln. Bei Einrichtung einer Funkverbindung zwischen Anzeigeeinheit 7, Eingabeeinheit 8 und der Wiegeeinheit 4 kann bei einer Funkreichweite von etwa 3 Meter die Eingabeeinheit 8 und die Anzeigeeinheit 7 auch räumlich beabstandet von der Messeinheit 4 verwendet werden.

Um den Bedienkomfort zu erhöhen und den Energieverbrauch der Messeinheit 4 zu minimieren, kann die Waage 1 sich nur bei Auflage eines Wägegutes einschalten, damit dann das entsprechende Gewicht und andere Daten angezeigt werden. Dies gewährleistet einen niedrigen Stromverbrauch.

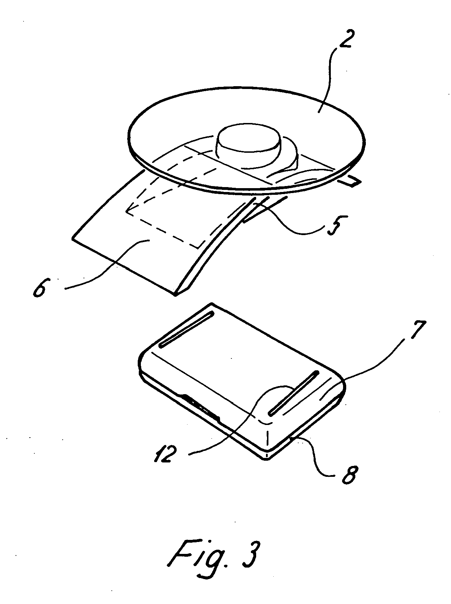

Auch die Anzeigeeinheit 7 muss zu Beginn einer Wägung nicht extra eingeschaltet werden. Sie schaltet direkt auf Gewichtsanzeige, sobald das Wägegut aufgelegt wird. Wie in Figur 3 gezeigt ist, kann die Einheit aus Anzeigeeinheit 7 und Eingabeeinheit 8 von dem Fußelement 5 entfernt werden, wobei an der Anzeigeeinheit 7 rückseitig Leisten 12 als Abstandshalter, Rastmittel oder Magnetstreifen vorhanden sein können.

In der Eingabeeinheit 8 und der Anzeigeeinheit 7 können in einem Speicher Lebensmitteldaten über den Kohlenhydratanteil, Eiweißanteil, Fettanteil, Cholesterinanteil, Kilo-Joule-Anteil sowie anderer Einheiten zu Lebensmittel vorgesehen sein. Die entsprechenden Daten können alphabetisch und/oder unter Ziffern abgelegt sein, wobei für jedes Lebensmittel eine Ziffer zugeordnet ist, um bei der Benutzung für häufig konsumierte Lebensmittel die Bedienung zu erleichtern. Soweit das Bedienungsprogramm intelligent ausgeführt ist, können dem Benutzer auch wertvolle Hinweise zur richtigen Dosierung der Lebensmittel gegeben werden, beispielsweise wenn für ein Krankheitsprofil gewisse Mengen an Lebensmitteln konsumiert werden sollen bzw. wenn gewisse Höchstwerte nicht überschritten werden sollen.

## Patentansprüche

1. Waage (1), insbesondere für Nahrungsmittel, mit einer Aufnahme (2) für den zu wiegenden Gegenstand, die an einem Fußelement (5) gehalten ist, einer Anzeigeeinheit (7) und einer Eingabeeinheit (8), **dadurch gekennzeichnet, dass** die Anzeigeeinheit (7) und die Eingabeeinheit (8) als separates Bauteil von dem Fußelement (5) und der Aufnahme (2) entfernbar sind und für einen Datenaustausch eine ankoppelbare Schnittstelle vorhanden ist.

2. Waage nach Anspruch 1, **dadurch gekennzeichnet, dass** eine kabellose Schnittstelle mit Übertragung der Daten per Funk oder Infrarot vorgesehen ist.

3. Waage nach Anspruch 1 oder 2, **dadurch gekennzeichnet, dass** an dem Fußelement (5) eine Schnittstelle für den Datenaustausch vorgesehen ist.

4. Waage nach einem der Ansprüche 1 bis 3, **dadurch gekennzeichnet, dass** eine mechanische oder magnetische Ankopplung zwischen Anzeigeeinheit (7) und Eingabeeinheit (8) einerseits und dem Fußelement (5) andererseits möglich ist.

5. Waage nach einem der Ansprüche 1 bis 4, **dadurch gekennzeichnet, dass** die Anzeigeeinheit (7) ein Display (10) aufweist, das rückseitig an das Fußelement (5) anlegbar ist.

6. Waage nach Anspruch 5, **dadurch gekennzeichnet, dass** die Anzeigeeinheit (7) über Magnete oder Rastmittel an dem Fußelement (5) fixierbar ist.

7. Waage nach einem der Ansprüche 1 bis 6, **dadurch gekennzeichnet, dass** die Eingabeeinheit (8) verschwenkbar an der Anzeigeeinheit (7) gehalten ist.

8. Waage nach einem der Ansprüche 1 bis 7, **dadurch gekennzeichnet, dass** die Eingabeeinheit (8) ein Editieren von Daten ermöglicht, insbesondere von Nährwerten von Lebensmitteln.

9. Waage nach einem der Ansprüche 1 bis 8, **dadurch gekennzeichnet, dass** die Eingabeeinheit (8) zur Aktualisierung von Daten an einen PC anschließbar ist.

10. Waage nach einem der Ansprüche 1 bis 9, **gekennzeichnet durch** eine zusätzliche Anzeige in der Waage und Bedienelemente zum Ein- /Ausschalten, Tarieren und/oder Umschalten der Gewichtseinheit.
